Europäisches Patentamt

European Patent Office

Office européen des brevets

(11) Numéro de publication: **0 217 706 B1**

# FASCICULE DE BREVET EUROPEEN

(45) Date de publication de fascicule du brevet: **04.03.92**

(51) Int. Cl.⁵: **G01N 23/12**, G01F 23/28, G21C 17/02, G21K 1/04

(21) Numéro de dépôt: **86402015.1**

(22) Date de dépôt: **15.09.86**

(54) **Procédé de mesure du taux de vide dans une canalisation véhiculant un fluide et installation pour la mise en oeuvre de ce procédé.**

(30) Priorité: **19.09.85 FR 8513891**

(43) Date de publication de la demande:
**08.04.87 Bulletin 87/15**

(45) Mention de la délivrance du brevet:
**04.03.92 Bulletin 92/10**

(84) Etats contractants désignés:
**BE CH DE FR GB IT LI**

(56) Documents cités:
**FR-A- 1 476 433**
**US-A- 2 659 012**

**NUCLEAR INSTRUMENTS AND METHODS,
vol. 190, no. 1, novembre 1981, pages
135-148, North-Holland Publishing Co., Amsterdam, NL; A.M.C. CHAN et al.: "Design aspects of gamma densitometers for void fraction measurements in small scale two-phase flows"**

(73) Titulaire: **COMMISSARIAT A L'ENERGIE ATOMIOUE Etablissement de Caractère Scientifique Technique et Industriel
31/33, rue de la Fédération
F-75015 Paris(FR)**

(72) Inventeur: **Bernard, Patrice
Les Cerisiers-Bâtiment B 49 Te Avenue Saint Jérôme
F-13100 Aix en Provence(FR)**
Inventeur: **Cray, Jacques
7, Résidence de la Tour d'Aygosi
F-13100 Aix en Provence(FR)**

(74) Mandataire: **Mongrédien, André et al
c/o BREVATOME 25, rue de Ponthieu
F-75008 Paris(FR)**

## Description

L'invention concerne un procédé de mesure du taux de vide dans une canalisation dans laquelle circule un fluide qui peut être en régime bi-phasique et une installation pour la mise en oeuvre de ce procédé.

Elle s'applique notamment à l'inventaire en eau du circuit primaire d'un réacteur nucléaire à eau pressurisée, particulièrement en cas de fonctionnement accidentel de ce réacteur.

Un réacteur à eau sous pression comporte, de manière connue, une cuve à parois épaisses, renfermant un coeur constitué d'assemblages de crayons combustibles. La chaleur produite par la réaction nucléaire est extraite du coeur par une circulation sous pression d'eau de refroidissement. Cette eau est amenée par une canalisation de forte section, appelée branche chaude du circuit primaire, jusqu'à un générateur de vapeur dans lequel elle échange sa chaleur avec l'eau du circuit secondaire. Elle retourne ensuite dans la cuve par la branche froide du circuit primaire.

Au cours du fonctionnement normal du réacteur, l'eau du circuit primaire est maintenue à une pression suffisamment élevée pour rester en phase liquide. Il peut arriver toutefois dans des circonstances accidentelles, par exemple en cas de chute de pression ou en cas d'élévation anormale de la température de l'eau, que de la vapeur d'eau saturée apparaisse dans ce circuit et que s'y établisse un régime bi-phasique. On appelle "taux de vide" $\alpha$ le pourcentage du volume occupé par la vapeur rapportée au volume total du circuit.

L'analyse des situations accidentelles des réacteurs à eau sous pression montre qu'il est intéressant de pouvoir mesurer le taux de vide dans la branche chaude pour déterminer l'état thermohydraulique du circuit primaire et évaluer l'état de refroidissement du coeur et son évolution.

Les techniques de mesure radioactive de la densité d'un milieu, qui utilisent une source de rayonnement $\gamma$ ou X et un détecteur diamétralement opposé par rapport à la source, sont particulièrement bien adaptées au cas d'un réacteur nucléaire dans lequel la température et la pression du fluide empêchent d'utiliser des méthodes classiques. Ces techniques de mesure radioactive reposent sur la mesure de l'atténuation du rayonnement qui a traversé la canalisation. On en déduit la densité du milieu fluide qui circule dans cette canalisation. Un aperçu en est donné dans l'article de Chan et Banerjee : "Design aspect of gamma densitemeters for void fraction measurements in small scale two-phase flows" NUCLEAR INSTRUMENTS AND METHODS, volume 190, numéro 1, année 1981, North-Holland Publishing Co, conformément au préambule de la revendication indépendante 1.

Cependant, les sources radioactives parasites qui se trouvent dans le circuit primaire et qui sont constituées notamment par l'azote 16, par les produits de corrosion en suspension dans l'eau ou déposés sur les parois internes des tuyauteries, et par les produits de fission provenant d'éventuelles ruptures des gaines des crayons combustibles des assemblages qui forment le coeur du réacteur, peuvent perturber de telles mesures.

Dans le cas où le niveau d'activité des sources radioactives parasites est peu important relativement à celui de la source utilisée pour la mesure, il suffit d'utiliser deux détecteurs, l'un situé face à la source pour enregistrer le signal, dû au rayonnement émis par cette source augmenté du rayonnement provenant des sources parasites, et l'autre dans une zone dans laquelle il ne mesure que le rayonnement des sources parasites. On fait la différence des signaux délivrés par le premier et le deuxième détecteurs pour obtenir le signal correspondant à la seule source utilisée pour la mesure.

Une variante améliorée de cette méthode fait l'objet du brevet FR 1 476 433 : elle consiste à moduler, au moyen d'une roue en plomb à dents carrées, le rayonnement émis par la source, et, au moyen d'un discriminateur et d'un amplificateur différentiel, à soustraire le signal enregistré pendant la période d'obturation de la source, de celui enregistré pendant la période d'ouverture.

Cette méthode ne permet cependant pas de mesurer avec précision le taux de vide dans une canalisation du circuit primaire d'un réacteur nucléaire à eau pressurisée.

En effet, dans ce cas le niveau d'activité des sources parasites peut être de plusieurs milliers de fois supérieur à celui de la source utilisée pour la mesure. Ce sera le cas, en particulier, si un grand nombre de ruptures de gaines de crayons combustibles se produisent.

Le niveau d'activité de ces sources parasites présente des variations aléatoires et rapides. A cause de ces variations, il est très difficile de faire la distinction entre la fraction du signal électrique délivré par le détecteur qui doit être attribuée aux sources parasites et celle qui doit être attribuée à la source utilisée pour la mesure.

Ce signal électrique peut aussi être perturbé par des signaux parasites dus aux vibrations des différents éléments du système de mesure. L'ensemble de tous les signaux parasites constitue le bruit de fond, qui peut, comme on vient de l'expliquer, "noyer" le signal que l'on cherche à mesurer.

L'invention a précisément pour objet un procédé de mesure, notamment du taux de vide dans une canalisation véhiculant un fluide bi-phasique, qui permet de surmonter les difficultés mentionnées ci-dessus en faisant la distinction entre le signal que l'on cherche à mesurer et le bruit de fond, et une installation pour la mise en oeuvre de ce procédé.

Ce procédé doit permettre de suivre l'évolution du taux de vide même lorsque le niveau d'activité des sources parasites est élevé, c'est-à-dire très supérieur à celui de la source utilisée pour la mesure. Il doit permettre également une mesure précise, même en cas d'évolution rapide du taux de vide et de variation du bruit de fond au cours de la mesure.

Ces buts sont atteints, conformément à l'invention, par une modulation du rayonnement de la source à une fréquence fo déterminée, et par la détermination de la transformée de Fourier autour de cette valeur de la fréquence, du signal délivré par le détecteur en fonction du temps.

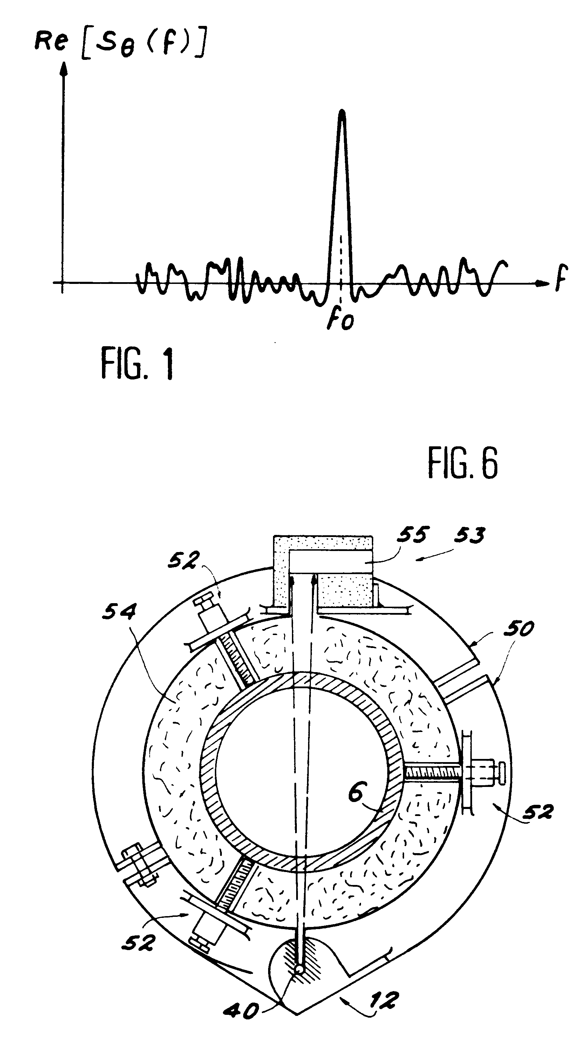

Ainsi, conformément à l'invention, grâce à la modulation du rayonnement émis par la source radioactive utilisée pour la mesure, le passage du domaine temporel au domaine fréquentiel permet de concentrer le signal de la source à la fréquence de modulation tandis que le signal du bruit de fond est réparti sur l'échelle des fréquences. En outre, la contribution du signal utile croît avec la durée de l'enregistrement, alors que la composante du bruit garde une valeur moyenne nulle. Autrement dit, dans le domaine fréquentiel, le signal enregistré présente un pic, autour de la fréquence de modulation, dont l'amplitude croît avec la durée de l'enregistrement (figure 1). On peut ainsi "extraire" le signal provenant de la source du bruit de fond.

Ceci apparaît clairement à l'examen de la formulation mathématique du problème, que l'on peut résumer brièvement de la façon suivante. On décompose l'expression $s_\theta(t)$ du signal, enregistré pendant un intervalle de temps $\theta$, en trois termes : $s_\theta(t) = a_\theta(t).h(t) + b_\theta(t)$, où $a_\theta(t)$ désigne le signal utile non modulé, de valeur moyenne $\bar{a}_\theta$, $b_\theta(t)$ est le bruit de fond, et $h(t)$ la fonction périodique échelon de période

$$T_o = \frac{1}{f_o}.$$

Le calcul montre que le module de la transformée de Fourier de $s_\theta(t)$, pour la valeur $f_o$ de la fréquence est égal à :

$$H = \bar{a}_\theta \cdot \frac{\sqrt{\alpha_1^2 + \beta_1^2}}{\alpha_o} \cdot \theta$$

où $\alpha_o$, $\alpha_1$, $\beta_1$, sont les premiers coefficients de la série de Fourier représentant la fonction $h(t)$.

L'invention concerne donc un procédé de mesure du taux de vide $\alpha$ dans une canalisation, dans laquelle circule un fluide en régime bi-phasique, au moyen d'une source de rayonnement, d'un détecteur séparé de la source par un trajet traversant la canalisation et délivrant un signal électrique qui est fonction du rayonnement reçu, ce procédé se caractérisant en ce que :

- on obture périodiquement le collimateur de la source de rayonnement avec une fréquence $f_0$ bien déterminée, dite fréquence de modulation choisie, entre 1 Hz et 50 Hz, et différente des valeurs des fréquences de vibration de la canalisation comprises entre 1 Hz et 50 Hz,
- on enregistre le signal $s_\theta(t)$ délivré par le détecteur pendant une durée $\theta$ où $t$ désigne le temps,
- on détermine la transformée de Fourier $S_\theta(f_0)$ de $s_\theta(t)$ autour de la fréquence de modulation, et on en déduit l'amplitude $a$ du signal utile, c'est-à-dire ne provenant que de la source de rayonnement,
- on mesure la pression P et la température T du fluide présent dans la canalisation au niveau du détecteur,
- on calcule la masse volumique $\rho_L$ et $\rho_V$ du liquide et de la vapeur, respectivement, à cette température et à cette pression,
- on calcule le taux de vide $\alpha$ par la formule :

$$\alpha = \frac{\rho_L - \frac{1}{c}\left(\text{Log } k - \text{Log } a\right)}{\rho_L - \rho_V}$$

dans laquelle c et k sont des constantes géométriques dont les valeurs sont déterminées expérimentalement par un étalonnage préalable.

Le choix de la valeur de la fréquence de modulation résulte d'un compromis tel que, d'une part, le mouvement de l'obturateur ne pose pas de problème de tenue mécanique, et que, d'autre part, le taux de vide et le bruit de fond ne varient pas de façon significative pendant un intervalle de temps de mesure, tout en évitant les valeurs des fréquences des vibrations induites par les pompes dans la canalisation où circule le fluide objet de la mesure.

L'installation de mesure du taux de vide conforme à l'invention comprend :
- un bloc source renfermant au moins deux sources de rayonnement, collimatées,
- un bloc détecteur comprenant au moins deux détecteurs collimatés chacun recevant le rayonnement d'une source ainsi que les rayonnements parasites, et délivrant un signal qui est fonction du rayonnement reçu en fonction du temps,
- un écran absorbant le rayonnement, mobile et apte à être animé d'un mouvement périodique de manière à obturer le collimateur de chacune desdites sources, avec une fréquence déterminée dite fréquence de modulation,
- des moyens de traitement du signal délivré par les détecteurs pour transformer la représentation en fonction du temps de ce signal en une représentation en fréquence,
- des moyens de contrôle et de commande de l'installation,
- et des moyens de fixation des bloc-source et détecteur sur la canalisation.

Les moyens de traitement du signal comprennent :
- un filtre passe-bande, pour laisser passer les fréquences comprises entre une fréquence limite inférieure et une fréquence limite supérieure, et éventuellement
- une interface de conversion analogique-digitale pour convertir le signal analogique délivré par le détecteur en un signal digital, un microcalculateur relié à l'interface de conversion analogique-digitale, pour calculer la transformée de Fourier du signal et des unités de sorties,
- un premier étage d'amplification courant-tension suivi d'un second étage amplificateur qui supprime la composante continue du signal.

Les moyens de contrôle et de commande comportent une unité logique à laquelle on fournit les signaux utiles pour la commande du système et la détermination du taux de vide, en particulier la valeur de la pression du fluide dans la branche chaude, et la valeur de la température dans cette branche chaude, cette unité étant apte à commander l'alimentation des moteurs d'entraînement de l'écran d'occultation du bloc source.

D'autres caractéristiques et avantages de l'invention ressortiront de la description d'un exemple de réalisation donné à titre indicatif en référence aux figures annexées, sur lesquelles :
- la figure 1, déjà mentionnée, représente la forme de la transformée de Fourier du signal enregistré au voisinage de la fréquence de modulation,
- la figure 2 est une vue d'ensemble schématique d'une installation nucléaire de production de puissance dans laquelle le réacteur nucléaire est équipé d'une installation de mesure conforme à l'invention,
- la figure 3 est une vue schématique en coupe de la partie mécanique de l'installation de mesure conforme à l'invention, représentée sur la figure 1,
- la figure 4 est une vue schématique en coupe d'un bloc source comportant un disque de modulation,
- la figure 5 est une vue d'une variante de réalisation du bloc source. Cette variante comporte deux écrans tournants de modulation du signal de la source,
- la figure 6 est une vue en coupe de la branche chauce au niveau de la fixation du bloc source et du bloc de détection,
- la figure 7 est une représentation synoptique des moyens de conditionnement du signal du détecteur,
- la figure 8 est une vue synoptique schématique d'ensemble de l'installation de mesure.

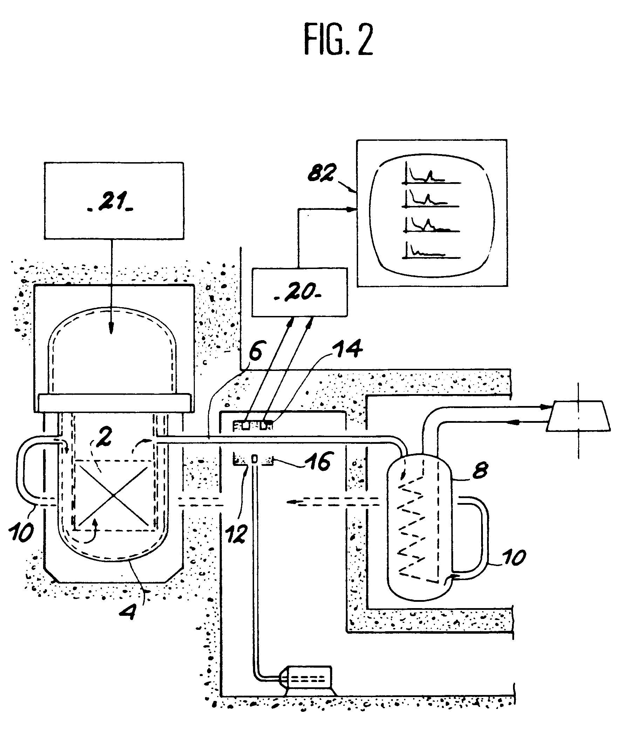

On a représenté sur la figure 2 une vue schématique et partielle d'une installation nucléaire de production de puissance équipée d'une installation de mesure conforme à l'invention du taux de vide dans la branche chaude du circuit primaire.

Le circuit primaire est le circuit de refroidissement du combustible. Il contient l'eau primaire qui transfère la chaleur des éléments combustibles du coeur 2 à l'eau du circuit secondaire qui est vaporisée. Il comporte plusieurs boucles de refroidissement, généralement trois ou quatre, dont une seule est représentée sur la figure, branchées en parallèle sur la cuve 4 du réacteur. Chaque boucle comprend successivement une branche chaude constituée par une tuyauterie de fort diamètre qui alimente en eau le générateur de vapeur 8 de la boucle, une branche froide 10 qui relie le générateur de vapeur à la cuve, et sur laquelle est intercalée une pompe primaire (non représentée) de mise en circulation de l'eau primaire.

Sur une des boucles est branché un pressuriseur qui contrôle les variations de pression et de volume

4

du fluide primaire.

Le circuit primaire est enfermé dans le bâtiment réacteur qui est une enceinte étanche en béton précontraint recouvert d'une peau. Dans le bâtiment réacteur, les équipements du circuit sont logés à l'intérieur d'une jupe de béton dans laquelle on ne peut pas pénétrer pendant le fonctionnement du réacteur.

L'installation de mesure conforme à l'invention représentée schématiquement sur la figure 2 comprend un bloc source 12, un ou plusieurs blocs de détection 14 diamétralement opposés à la source par rapport à la tuyauterie 6. Le bloc source et le ou les blocs de détection 14 sont fixés sur la tuyauterie 6 par un ensemble de fixation 16 qui sera décrit plus en détail ultérieurement.

De préférence, l'installation comporte également un bloc 18 de stockage et de transfert de la source qui, lui aussi, sera décrit plus en détail ultérieurement.

Les signaux électriques analogiques continus délivrés par le ou les blocs de détection 14 sont transmis à un ensemble schématisé par le rectangle 20. Cet ensemble assure un traitement approprié des signaux délivrés par le détecteur de manière à extraire le signal provenant de la source du bruit de fond.

Un dispositif de sécurité du réacteur 21 peut également être actionné automatiquement à partir de l'ensemble du traitement 20.

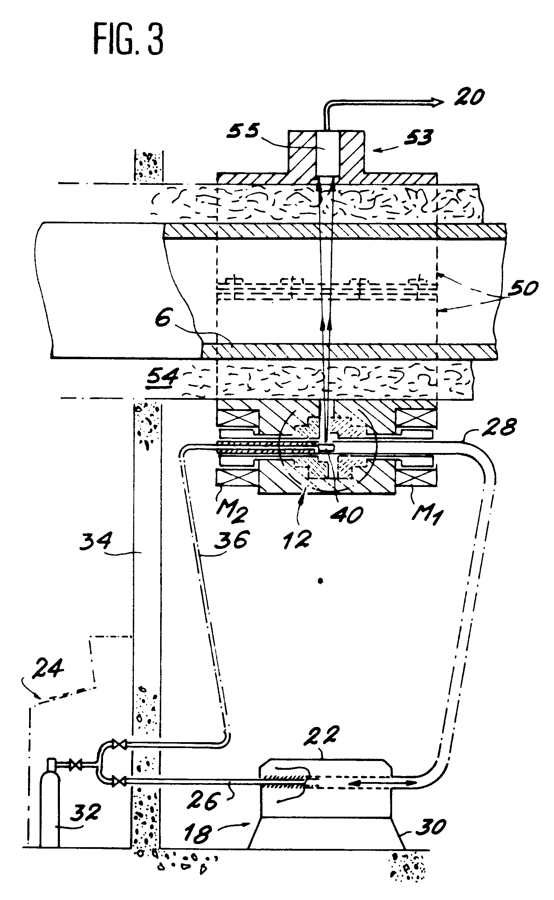

On a représenté sur la figure 3 une vue à échelle agrandie par rapport à la figure 2, et qui montre la partie mécanique de l'installation de mesure du taux de vide.

Le bloc 18 de stockage et de transfert des sources comporte une partie principale qui est la protection en plomb 22 et des parties annexes, à savoir un pupitre de commande 24, une liaison 26 entre le pupitre 24 et le bloc de stockage proprement dit, une liaison 28 entre le bloc de stockage et le bloc source.

Les sources sont logées au centre d'un château sphérique en plomb reposant sur un berceau 30. Ce château 22 est constitué de deux demi-coquilles moulées et assemblées. Le bloc de stockage est fixé sur le sol. Son poids est d'environ 270 Kg. Un chariot de transport permet de le déplacer dans l'enceinte. Des anneaux de préhension (non représentés) permettent de lever le bloc à l'aide d'un palan pour retirer le chariot et le reposer ensuite pour sa fixation sur le sol. La fixation au sol permet la tenue aux séismes. Le bloc de stockage est percé de canaux : deux canaux pour le passage des sources et deux canaux de plus faible diamètre, rejoignant les deux précédents, pour la commande pneumatique du transfert des sources entre le bloc de stockage et le bloc source. Ces canaux sont conformés de manière à ce que le rayonnement émis par les sources ne puisse jamais s'échapper du bloc de stockage pour assurer une protection du personnel contre le rayonnement. On a prévu un contrôle de position de la source au moyen d'un bobinage (non représenté) recevant un noyau de fer doux qui génère une force électromagnétique que l'on mesure.

Chaque source est reliée au bloc source par l'intermédiaire d'un canal source 28. Des tubes de liaison permettent, à l'aide de bouteilles 32 d'air comprimé, soit de pousser la source du bloc de transfert vers le bloc source, soit de la faire retourner du bloc source vers le bloc de stockage.

Le pupitre de commande 24 regroupe les commandes électriques, les vannes, les indications de la position de la source. Ce pupitre est situé derrière un mur de béton 34 de la salle se trouvant sous la branche chaude 6.

Les tubes de liaison 26 entre le pupitre 24 et le bloc de stockage et de transfert, ainsi que les tubes de liaison 36 entre le pupitre et le bloc source 12 sont en acier inoxydable de faible diamètre.

Chaque canal source est rigide, son diamètre intérieur est de l'ordre de 12 mm.

Pour transférer une source du bloc de stockage dans le bloc source, il suffit de mettre en légère pression le tube de liaison 26. Pour faire retourner une source dans le bloc de stockage et de transfert, on met en légère pression le tube de liaison 36.

En dehors de ces deux opérations, l'installation est à l'atmosphère. Les bouteilles 32 d'air comprimé sont retirées et la position des sources est contrôlée.

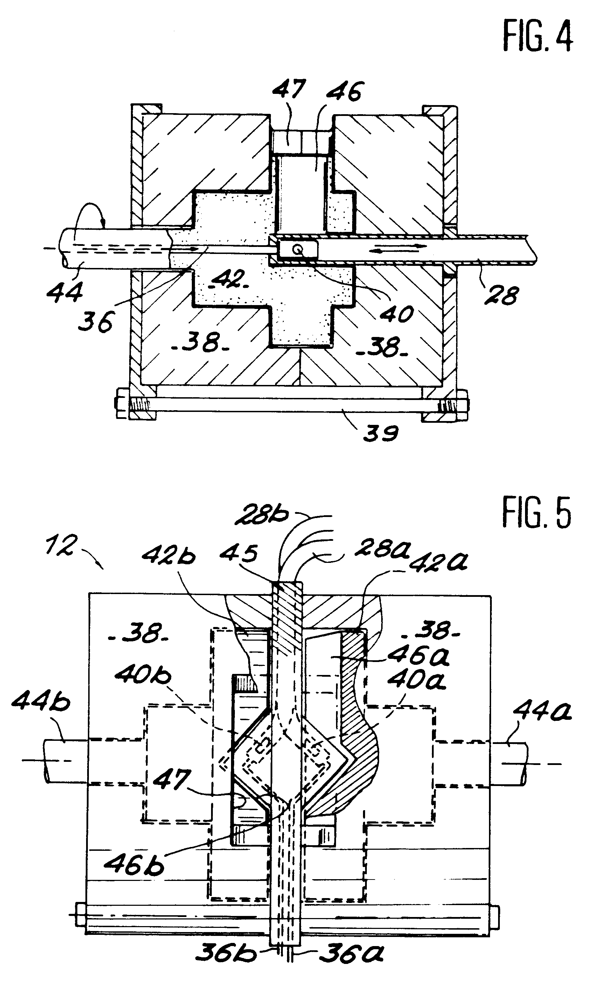

Le bloc source, représenté schématiquement sur la figure 4 comprend deux demi-coquilles 38 en plomb solidarisées par trois tirants 39 disposés à 120˚, dont un seul a été représenté et qui assurent la collimation de la source radioactive 40. Cette source est introduite, lorsqu'on désire effectuer une mesure, par le canal source 28, comme expliqué en référence à la figure 3. Un disque 42 monté tournant est entraîné en rotation par un moteur synchrone (non représenté) solidaire de l'arbre 44, afin d'éviter toute liaison supplémentaire. Un passage 46 est prévu dans le disque 42 de sorte que, lorsque le disque 42 se trouve en regard de l'ouverture 47, c'est-à-dire dans la position représentée sur la figure 4, le rayonnement de la source 40 atteint les détecteurs. Lorsque le disque 42 tourne, il occulte périodiquement la source, ce qui crée une modulation du signal de source.

On a représenté sur la figure 5 une variante de réalisation préférée dans laquelle le bloc source comprend deux disques de modulation 42a, 42b entraînés par deux moteurs synchrones séparés (non représentés) par l'intermédiaire de deux arbres 44a et 44b.

Chaque disque comporte un passage, respectivement 46a et 46b, pour laisser passer le rayonnement des sources 40a et 40b respectives. Ce disque 42b a été représenté de manière que le passage 46b est orienté perpendiculairement au plan de la figure, tandis que le disque 42a est décalé angulairement de 90°.

Le passage 46a se trouve donc dans le plan de la figure 4. Il est orienté vers le bas. On a désigné par 47 l'ouverture pratiquée dans les coquilles 38. La source 40a est donc occultée tandis que le rayonnement de la source 40b atteint les détecteurs.

La mise en place des sources est obtenue, de manière identique à ce qui a été expliqué précédemment, par les canaux de sources 28a et 28b. Le retour des sources est obtenu au moyen d'une pression d'air comprimé appliquée par les tubes de liaison 36a et 36b.

Le bloc source 12 comprend une partie en plomb qui assure la collimation des deux sources et leur modulation. Elle est constituée de deux demi-coquilles 38 fixées sur une partie centrale fixe constituée d'un disque central 45 percé pour le passage des canaux de sources 28a et 28b et des canalisations d'air comprimé 36a et 36b. Ce disque comporte une cavité centrale aménagée pour le positionnement des deux sources 40a et 40b. Les deux disques mobiles 42a et 42b sont entraînés par deux moteurs synchrones. Ils sont solidaires des arbres moteurs 44a et 44b pour éviter toute liaison supplémentaire.

Le bloc source maintient les sources à l'endroit de la mesure, assure la collimation et la modulation du signal issu des sources. Il assure une protection biologique en cas d'intervention sur le dispositif, par exemple en cas de non retour de la source.

Le bloc de détection a pour fonction d'assurer la collimation des détecteurs. Il comporte un collimateur quadrillé constitué par deux séries de tôles parallèles échancrées à mi-hauteur et emboîtées l'une dans l'autre de manière à constituer une grille qui réduit l'influence du rayonnement parasite.

Le bloc de détection est de forme parallélépipédique. Il contient des détecteurs, à savoir des chambres d'ionisation optimisées pour le rayonnement du cobalt 60, de 40 mm de diamètre et de 200 mm de longueur utile, par exemple.

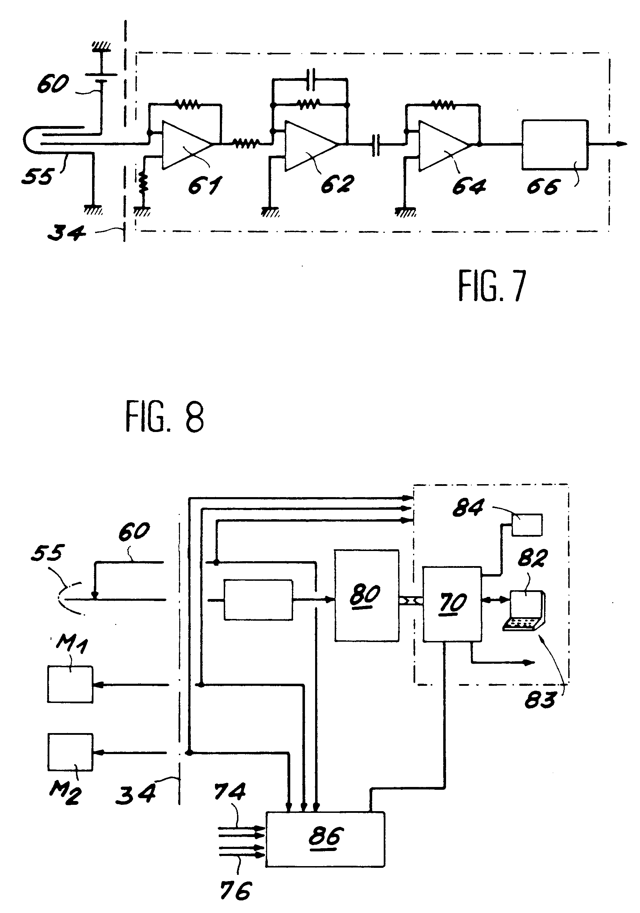

Le système de fixation représenté sur la figure 6 a pour fonction de rendre le bloc source et le bloc de détection 53 solidaires de la branche chaude. Il se compose de deux secteurs 50 reliés par des vis ceinturant le calorifuge 54 et fixés à la branche chaude par trois vérins 52 disposés à 120° l'un de l'autre. Afin de ne pas transmettre les vibrations, les tiges des vérins sont terminées par des blocs amortisseurs en caoutchouc.

Etant donné que le bloc de stockage et de transfert, le bloc source, le bloc de détection 53 et le système de fixation sont situés dans le bâtiment réacteur, il faut assurer la liaison entre ces éléments et l'électronique et le système de contrôle de commande de ce système. Cette liaison est assurée par des câbles de liaison (non représentés) qui présentent des caractéristiques de résistance suffisantes pour tenir aux conditions de température et d'irradiation imposées par les normes relatives aux accidents de dimensionnement. On trouve d'une part des câbles destinés à acheminer les signaux de type coaxial anti-microphonique, et des câbles d'alimentation à haute tension.

Le signal utile, en fonction des conditions de mesure, (avec ou sans contamination), se situe entre $10^{-11}$ et $10^{-8}$ Ampère. Pour ne pas être confronté à la difficulté de transporter des courants très faibles (il n'est pas souhaitable d'avoir un amplificateur courant tension dans le bâtiment réacteur, car il faudrait limiter les variations de température auxquelles il est soumis au moyen d'un thermostat), on utilise une "porteuse", c'est-à-dire une petite source (de l'ordre de 1 millicurie de césium 137) qui génère dans les compteurs un courant de l'ordre de $10^{-9}$ Ampère, ainsi que des câbles coaxiaux adaptés et protégés des parasites électro-magnétiques. Il est alors possible de ne prévoir aucun conditionnement du signal en bâtiment réacteur.

D'autre part, une source auxiliaire permet de contrôler le bon fonctionnement du système lorsque le collimateur source ne tourne pas et qu'il est en position obstruée.

Electronique de conditionnement du signal

L'electronique de conditionnement du signal a été représentée sur la figure 7. Elle comprend un filtre passe-bas de fréquence 15 Hz d'ordre élevé pour respecter le théorème de Shannon. On sait en effet que selon ce théorème, pour que la répétition périodique d'un spectre ne déforme pas le motif répété, il faut et il suffit que la fréquence de répétition $F_e$, qui est la fréquence d'échantillonnage, soit égale ou supérieure à $2F_M$, $F_M$ étant la fréquence la plus haute contenue dans le spectre.

Le filtre passe-bas est suivi d'un filtre passe-haut de fréquence 2 Hz avec un filtre du second ordre. Les composants utilisés pour le conditionnement du signal permettent d'avoir la bande passante comprise entre 2 et 15 Hz.

L'electronique associée est située dans la salle de contrôle séparée du bâtiment réacteur par le mur de béton 34. Elle comprend, pour chaque voie de mesure,une alimentation 60 à haute tension stabilisée et filtrée afin d'éviter d'introduire des fréquences parasites ; un préamplificateur 61 ; un premier étage 62 d'amplification courant-tension prévu pour fonctionner dans une bande de fréquence comprise entre 2 et 50 Hz. Cet étage d'amplification 62 présente un faible rapport bruit/signal et un gain suffisant compte tenu de la faiblesse du courant minimal à mesurer, environ $10^{-11}$ Ampère.

Ce premier étage d'amplification est suivi d'un second étage d'amplification 64. Ce second étage d'amplification est suivi d'un filtre passe-bande 66 constitué d'un filtre passe-haut avec un filtre du second ordre qui laisse passer les fréquences supérieures à 2 Hz et d'un filtre passe-bas avec filtre d'ordre deux qui laisse passer les fréquences inférieures à 50 Hz. Dans ce second étage amplificateur 64, on supprime la composante continue et on amplifie les fluctuations.

## Ensemble de numérisation, traitement et visualisation

Cet ensemble représenté sur la figure 8, comprend un calculateur informatique 70. La fonction de ce calculateur est de numériser les différents signaux analogiques et de faire ensuite les traitements mathématiques nécessaires pour obtenir le taux de vide moyen en branche chaude.

Plusieurs types de signaux sont reçus par le microcalculateur : les signaux électriques émis par les détecteurs de radiation : les valeurs moyennes des signaux émis par les détecteurs : les signaux des voies de contrôle ainsi que les informations venant de la centrale. Ces Informations sont constituées par le signal d'arrêt d'urgence qui provoquera le déclenchement des mesures, par deux informations 74 de la pression du circuit primaire (capteur du pressuriseur) ; deux informations 76 qui donnent la température de l'eau en branche chaude obtenue par une sonde située dans un doigt de gant installé dans la branche chaude.

Le calculateur informatique est composé de différents éléments. Il comporte d'abord une interface de conversion analogique digitale 80 ou 86. Trois types de signaux sont traités dans cette interface : ceux pour lesquels on accumule l'information pour obtenir une meilleure précision , Qui sont les v(t) (fluctuation); ceux pour lesquels il est suffisant de connaître une valeur moyenne pendant la mesure, qui sont la pression qui règne dans le circuit primaire et la température de l'eau en branche chaude ainsi que les signaux de contrôle du bon fonctionnement et de l'arrêt d'urgence du réacteur.

L'interface de conversion analogique-numérique reçoit les valeurs analogiques de ces différents signaux et les transforme en valeurs numériques. Dans une réalisation préférentielle de l'invention, on utilise deux interfaces : la première 80 assure la conversion analogique-numérique des fluctuations et la seconde 86, la conversion des autres signaux.

Dans l'exemple de réalisation décrit, les interfaces utilisées possèdent 12 bits.

## Microcalculateur

Le microcalculateur utilise un microprocesseur de 16 bits. Un microprocesseur de marque ZILOG (Z8000), Motorola, ou un Intel 8086, conviennent pour cette utilisation.

## Pupitre de commande et de contrôle

Il comporte une console 82 de visualisation de la courbe de densité spectrale de puissance du signal émis par les détecteurs, un clavier 83 et des afficheurs 84, par exemple du type à diode émettrice de lumière qui permettent l'affichage des calculs effectués par le calculateur.

Un microprocesseur 16 bits assure la gestion de l'ensemble, à savoir l'acquisition des données, le stockage de ces données, les calculs et les entrées-sorties.

L'utilisation d'un microprocesseur supplémentaire ou second microprocesseur, affecté à la gestion des données, permet un gain de temps appréciable. Il comporte une mémoire à accès aléatoire (RAM) dans laquelle sont stockées les données ; une mémoire morte (ROM) qui contient le programme et en particulier l'algorithme de calcul de la densité spectrale de puissance. Cet algorithme de transformée de Fourier rapide est de préférence un algorithme de Cooley-Tuckey ; le microprocesseur comporte également une carte d'entrée-sortie.

Les opérations se déroulent de la façon suivante :

- acquisition des données de fluctuation en fonction du temps v(t) pendant une durée $\theta$ ;
- acquisition des autres données (valeurs moyennes de v(t), pression et température) dans la branche chaude,
- calcul de la transformée de Fourier du signal de fluctuation,

- calculs conduisant à la détermination du taux de vide,
- sortie des informations,

Algorithmes de traitement

Le principe général du traitement du signal consiste à extraire et à déterminer le signal utile, c'est-à-dire le taux de comptage utile du détecteur dans le signal total constitué par le signal utile augmenté du signal parasite. Le signal de la source est modulé à une fréquence de 50 Hz environ.

La fluctuation du signal parasite dû au rayonnement $\gamma$ parasite fournit une contribution au signal total dans les basses fréquences. Cette contribution est due aux phénomènes suivants.

Dans le cas où le régime est un régime d'écoulement à bulles ou à bouchons de vapeur, le passage de ces bulles ou de ces bouchons de vapeur dans la tuyauterie en regard du détecteur provoque des fluctuations du signal car la concentration volumique en émetteurs $\gamma$ parasites est différente dans le liquide et dans la vapeur.

En cas d'écoulement en régime stratifié, la présence de vagues au niveau de la séparation entre le liquide et la vapeur provoque des rapprochements et des éloignements du liquide par rapport au détecteur, et donc des fluctuations du signal total perçu par ce détecteur.

Dans les cas les plus défavorables, la contribution de ces phénomènes est pratiquement nulle au-delà d'une fréquence de 2 Hz. C'est la raison pour laquelle on utilise un filtre passe-haut de fréquence 2 Hz qui permet de les éliminer.

Le bruit de détection est un bruit blanc, c'est-à-dire un bruit qui comporte toutes les fréquences. Il est lié ou nombre de coups comptés par le détecteur. Le principe du traitement du signal consiste à déterminer le niveau d de bruit de détection pour calculer l'amplitude H du pic de signal utile.

H est relié au taux de comptage utile a par la formule :

$$H = \frac{a^2 \, q^{-2} . \theta}{4}$$

q est la charge moyenne par événement d'ionisation dans la chambre d'ionisation et $\theta$ la durée de traitement. Donc a se déduit de H par la formule :

$$a = \frac{2}{q} . \sqrt{\frac{H}{\theta}}$$

On peut ensuite calculer $\alpha$ par la formule :

$$\alpha = \frac{\rho_L - \frac{1}{c} [Log \ k - Log \ a]}{\rho_L - \rho_V}$$

dans laquelle c et k sont des constantes.

On a représenté sur la figure 8, une courbe représentant la densité spectrale de puissance du signal d'un détecteur, en fonction de la fréquence. Les fluctuations du signal dues aux rayons $\gamma$ parasites représentent une contribution dans les basses fréquences.

Le bruit de détection, correspondant à la partie rectiligne 104 de la courbe, est un bruit blanc réparti sur l'ensemble des fréquences.

Le pic du signal utile modulé 106 est obtenu pour une fréquence égale à la fréquence de modulation de l'obturateur de source. Conformément à l'invention, on calcule l'amplitude $H = L-D$ de ce pic, L étant la densité spectrale de puissance du pic et D celle du bruit blanc de détection.

Au-delà d'une fréquence de coupure, par exemple de 15 Hz, obtenue au moyen d'un filtre passe-bas, la densité spectrale de puissance chute (partie 108 de la courbe).

L'installation de mesure du taux de vide en branche chaude, par transmission de rayonnement $\gamma$

modulé, qui vient d'être décrit, permet de suivre l'évolution du taux de vide en branche chaude et d'en connaître la valeur avec une précision meilleure que 6%, et un temps de réponse de moins de 2 mn, dans le cas de situations accidentelles (taux de vide variant entre 0 et 1, activité du circuit primaire pouvant correspondre à 50% de combustible dissout dans l'eau primaire). Optionnellement, il peut fournir une information sur le niveau de stratification.

Dans le cas très défavorable de 100% de ruptures de gaines en début d'accident, l'installation permettrait de détecter un taux de vide pour peu que celui-ci soit égal ou supérieur à $\Delta \alpha > 0,003$. Pour les situations les plus dégradées (du type TMI, forte contamination atmosphérique) la sensibilité serait de $\Delta \alpha > 0,03$ ce qui reste encore très bon.

Ce dispositif de mesure permet aux équipes de conduite de prendre suffisamment tôt, toutes les dispositions nécessaires pour éviter la dégradation de la situation, en particulier le dénoyage du coeur.

Ses caractéristiques satisfont aux critères de qualification, redondance et fiabilité demandés à l'instrumentation des centrales nucléaires.

Son implantation non intrusive et suffisamment simple peut se faire sur des réacteurs déjà en exploitation. Le coût des matériels pour équiper les trois boucles d'un réacteur à eau sous pression d'une puissance de 900 MWe est peu élevé. L'utilisation d'un tel dispositif autorise l'intervention sur les tuyauteries primaires et ne représente pas de contrainte particulière à l'exploitation.

Il pourrait aussi permettre de mesurer la température du fluide primaire en utilisant alors une source de plus forte activité (500 Curies).

## Revendications

1. Procédé de mesure du taux de vide $\alpha$ dans une canalisation (6) dans laquelle circule un fluide en régime biphasique, au moyen d'une source de rayonnement (40), d'un détecteur (55) séparé de la source par un trajet traversant la canalisation (6) et délivrant un signal électrique qui est fonction du rayonnement reçu, caractérisé en ce que :
   - on obture périodiquement le collimateur de la source de rayonnement avec une fréquence bien déterminée dite fréquence de modulation choisie entre 1 Hz et 50 Hz et différente des valeurs des fréquences de vibration de la canalisation comprises entre 1 Hz et 50 Hz,
   - on enregistre le signal $s_\theta(t)$ délivré par le détecteur pendant une durée $\theta$ où t désigne le temps,
   - on déteraine la transformée de Fourier de $s_\theta(t)$ autour de la fréquence de modulation, ladite transformée de Fourier ayant un module :

$$H = \bar{a}_\theta \cdot \frac{\sqrt{\alpha_1^2 + \beta_1^2}}{\alpha_0} \cdot \theta$$

   où à la fréquence de modulation, $\alpha_0$, $\alpha_1$ et $\beta_1$ sont les premiers coefficients de la série de Fourier représentant la fonction périodique échelon de période égale à l'inverse de la fréquence de modulation, et où $\bar{a}_\theta$ est la valeur moyenne du signal utile non modulé, et on en déduit l'amplitude a du signal utile, c'est-à-dire ne provenant que de la source de rayonnement,
   - on mesure la pression P et la température T du fluide présent dans la canalisation au niveau du détecteur (55),
   - on calcule la masse volumique $\rho_L$ et $\rho_V$ du liquide et de la vapeur, respectivement, à cette température et à cette pression,
   - on calcule le taux de vide $\alpha$ par la formule :

$$\alpha = \frac{\rho_L - \frac{1}{c}\left[\text{Log } k - \text{Log } a\right]}{\rho_L - \rho_V}$$

   dans laquelle c et k sont des constantes géométriques dont les valeurs sont déterminées expérimentalement par un étalonnage préalable.

2. Installation de mesure du taux de vide dans une canalisation (6) véhiculant un fluide en régime biphasique en milieu hostile, dans la branche chaude d'un réacteur nucléaire, caractérisée en ce qu'elle comporte :

- un bloc-source comprenant au moins deux sources de rayonnement collimatées (40a, 40b),
- un bloc détecteur comprenant au moins deux détecteurs collimatés (55),
- un écran mobile (42) et apte à être animé d'un mouvement périodique de manière à obturer le collimateur de chacune desdites sources avec une fréquence déterminée,
- un filtre passe-bande (66) pour laisser passer les valeurs comprises entre une fréquence limite inférieure et une fréquence limite supérieure,
- une unité logique de contrôle (70) à laquelle on fournit les valeurs de la pression et de la température du fluide,
- des moyens de fixation (50, 52) des blocs-source (12) et détecteur (53) sur la canalisation.

**Claims**

1. Method of measuring the void fraction $\alpha$ in a duct (6) in which a fluid flows in a two-phase regime, by means of a radiation source (40), a detector (55) separated from the source by a path traversing the duct (6) and delivering an electrical signal which is a function of the radiation received, characterised in that:
   - the collimator of the radiation source is periodically closed off with a precisely determined frequency, termed the modulating frequency, chosen between 1 Hz and 50 Hz and differing from the values of the vibrational frequencies of the duct, which lie between 1 Hz and 50 Hz,
   - the signal $s_\theta(t)$ delivered by the detector for a duration $\theta$, where t denotes time, is recorded,
   - the Fourier transform of $s_\theta(t)$ around the modulating frequency is determined, the said Fourier transform having a modulus:

$$H = \bar{a}_\theta \cdot \frac{\sqrt{\alpha_1^2 + \beta_1^2}}{\alpha_0} \cdot \theta$$

where, at the modulating frequency, $\alpha_0$, $\alpha_1$ and $\beta_1$ are the initial coefficients of the Fourier series representing the periodic step function with period equal to the inverse of the modulating frequency, and where $\bar{a}_\theta$ is the average value of the unmodulated useful signal, and the amplitude a of the useful signal, that is to say coming only from the radiation source, is deduced therefrom,
   - the pressure P and the temperature T of the fluid present in the duct at detector (55) level are measured,
   - the density $\rho_L$ and $\rho_V$ of the liquid and of the steam respectively are calculated at this temperature and at this pressure,
   - the void fraction $\alpha$ is calculated through the formula:

$$\alpha = \frac{\rho_L - \frac{1}{c}\left(\text{Log } k - \text{Log } a\right)}{\rho_L - \rho_V}$$

in which c and k are geometrical constants whose values are determined experimentally through a prior calibration.

2. Installation for measuring the void fraction in a duct (6) conveying a fluid in a two-phase regime in a hostile environment, in the hot leg of a nuclear reactor, characterised in that it comprises:
   - a source-unit comprising at least two collimated radiation sources (40a, 40b),
   - a detector unit comprising at least two collimated detectors (55),
   - a mobile shield (42) able to be endowed with a periodic motion in such a way as to close off the collimator of each of the said sources with a predetermined frequency,
   - a band-pass filter (66) for allowing through the values lying between a lower limiting frequency and an upper limiting frequency,
   - a monitoring logic unit (70) to which are supplied the values of the pressure and of the temperature of the fluid,

- means (50, 52) of fixing the source (12) and detector (53) units to the duct.

## Patentansprüche

1. Verfahren zur Messung der Leerraumrate $\alpha$ in einem Rohr (6), in dem ein Fluid zweiphasigen Zustands strömt, mittels einer Strahlenquelle (40), eines Detektors (55), der von der Quelle durch eine das Rohr (6) durchquerende Bahn getrennt ist und ein elektrische Signal liefert, das von der aufgenommenen Strahlung abhängig ist, dadurch gekennzeichnet, daß:

man den Kollimator der Strahlenquelle periodisch mit einer vorbestimmten Frequenz, genannt Modulationsfrequenz, verschließt, die zwischen 1 Hz und 50 Hz liegt und von Schwingungsfrequenzen des Rohrs, die zwischen 1 Hz und 50 Hz liegen, verschieden ist,

man das Signal $s_\theta$ (t) speichert, das von dem Detektor während einer Zeitdauer $\theta$ geliefert wird, wobei t die Zeit angibt,

man die Fourier-Transformation von $s_\theta$ (t) um die Modulationsfrequenz ermittelt, wobei diese Fourier-Transformation ein Modul:

$$M = \bar{a}_\theta \cdot \frac{\sqrt{\alpha_1^2 + \beta_1^2}}{a_0} \cdot \theta$$

aufweist, wobei bei der Modulationsfrequenz $\alpha_0$, $\alpha_1$ und $\beta_1$ die ersten Koeffizienten der Fourier-Reihe sind, die die periodische Sprungfunktion der dem Kehrwert der Modulationsfrequenz entsprechenden Periode darstellen, und wobei $a_\theta$ der Mittelwert des unmodulierten Nutzsignals ist, und man davon die Amplitude a des Nutzsignals, d.h. das nur von der Strahlenquelle stammt, abzieht

man den Druck (P) und die Temperatur (T) des in dem Rohr in Höhe des Detektors (5) anwesenden Fluides mißt,

man die Dichte $P_L$ und $P_V$ der Flüssigkeit und des Dampfes bei dieser Temperatur und diesem Druck berechnet,

man die Leerraumrate $\alpha$ durch die Gleichung:

$$\alpha = \frac{P_L - \frac{1}{c}\left(\log k - \log a\right)}{P_L - P_V}$$

berchnet, worin c und k geometrische Konstanten sind, deren Werte experimentell durch eine vorausgehende Eichung bestimmt werden.

2. Vorrichtung zur Messung der Leerraumrate in einem Rohr (6), das ein Fluid in zweiphasigem Zustand in einem Trägermedium führt, im heißen Zweig eines Kernreaktors, dadurch gekennzeichnet, daß sie enthält:

einen Quellenblock mit wenigstens zwei kollimierten Strahlenguellen (40a, 40b),

einen Detektorblock mit wenigstens zwei kollimierten Detektoren (55),

einen beweglichen Schirm (42), der in eine periodische Bewegung versetzt werden kann, um den Kollimator jeder der Quellen mit einer vorbestimmten Frequenz zu verschließen,

ein Bandpaßfilter (66) zum Durchlassen der Werte, die zwischen einer unteren Grenzfrequenz und einer oberen Grenzfrequenz liegen,

eine logische Steuereinheit (70), der die Druck- und Temperaturwerte des Fluides zugeführt sind,

Befestigungseinrichtungen (50, 52) für den Quellenblock (12) und den Detektorblock (52) an dem Rohr.

$$Re\left[S_{\theta}(f)\right]$$

FIG. 1

FIG. 6

# FIG. 2

# FIG. 3

FIG. 4

FIG. 5

FIG. 7

FIG. 8